# EUROPÄISCHE PATENTSCHRIFT

(11) **EP 0 408 488 B1**
(45) Veröffentlichungstag und Bekanntmachung des Hinweises auf die Patenterteilung: **10.11.1993**
(21) Anmeldenummer: 90810355.9
(22) Anmeldetag: 11.05.1990
(51) Int. Cl.: G01N 5/02

(54) **Vorrichtung zum Messen der Wasserdampfdurchlässigkeit eines Materials oder eines Gegenstandes**
Apparatus to measure the water vapour permeability of a material or object
Appareil pour la mesure de la perméabilité en vapeur d'eau des matériaux ou objets

(30) Priorität: 10.07.1989 CH 2561/89
(43) Veröffentlichungstag der Anmeldung: 16.01.1991
(73) Patentinhaber: Lyssy, Georges H., Dr., CH-8702 Zollikon (CH)
(72) Erfinder: Lyssy, Georges H., Dr., CH-8702 Zollikon (CH)
(74) Vertreter: Feldmann, Clarence Paul

(56) Entgegenhaltungen:
- DE-A- 3 819 335
- FR-A- 1 562 225
- US-A- 2 269 569
- PATENT ABSTRACTS OF JAPAN, Band 7, Nr. 290 (P-245)[1435], 24. Dezember 1983; & JP-A-58 165 038

## Beschreibung

Bisher wurde die Wasserdampfabgabe so gemessen, dass man den Gewichtsverlust der Materie selber durch Wägen festgestellt hat. Zur Prüfung der Wasserdampfdurchlässigkeit von Kunststoff-Folien, Papier oder Pappe schlägt die DIN 53122 vor, die zu prüfende Probe auf eine mit Absorptionsmittel gefüllte Schale wasserdampfdicht aufzuspannen und die Gewichtszunahme dieser Schale durch Wägen festzustellen. Während man nach dem erstgenannten Vefahren auch die Wasserdampfabgabe eines Körpers, zum Beispiel einer Frucht messen kann, eignet sich die Methode nach DIN nur zur Messung der Wasserdampfdurchlässigkeit von Folien, Papier oder Pappe. Beiden genannten Verfahren haftet der Nachteil an, dass der Gewichtsverlust beziehungsweise die Gewichtszunahme ein auf Milligramm genaues Wägen eines Körpers oder Gegenstandes beruht, der selber einige hundert Gramm wiegt. Ein solches Wägen ist nicht nur umständlich, sondern gibt leicht Anlass zu Messfehlern.

Die vorliegende Erfindung betrifft nun eine Vorrichtung zur Messung der Wasserdampfdurchlässigkeit gemäss Oberbegriff des Patentanspruches 1.

Zwar ist aus der DE-A-38'19'335 eine Vorrichtung bekannt, welche eine Messkammer aufweist, in dem ein Gegenstand einbringbar ist, wobei die Messkammer eine Lufteintritts- und eine Luftaustrittsöffnung aufweist und bei der vor der Lufteintrittsöffnung ein Gebläse und ein Lufttrockner angeordnet ist, während an der Luftaustrittsöffnung ein Feuchtigkeitskollektor fest angeschlossen ist. Dieses Gerät dient jedoch der Bestimmung des gesammten Feuchtigkeitsgehaltes einer in der Messkammer eingebrachten Probe. Mit etlichen Anpassungen, wie beispielsweise der Weglassung eines Ofens, liesse sich ein solches Gerät auch zur Bestimmung der Wasserdampfdurchlässigkeit eines verpackten oder unverpackten Gegenstandes einsetzen, dessen äussere Begrenzung das Diaphragma darstellt. Die gravimetrische Messung des Kollektors, der im Gerät integriert ist, erfolgt mit einer geräteinternen Wägevorrichtung. Zudem lässt ein solches Gerät die Messung der Wasserdampfdurchlässigkeit einer Folie nicht zu, da die Messkammer nicht in zwei Teilkammern trennbar ist und sich auch keine Folie aufspannen lässt. Hierzu wäre eine zusätzliche Messanordnung, beispielsweise gemäss der DIN-Norm 53122, noch erforderlich.

Es ist daher Aufgabe der vorliegenden Erfindung eine Vorrichtung der obgenannten Art zu schaffen, welche beide Messarten zulässt, eine einfache gravimetrische Messung ermöglicht und äusserst preiswert ist.

Die Aufgabe lösst eine Vorrichtung mit den Merkmalen des Patentanspruches 1. Weitere vorteilhafte Ausgestaltungsformen gehen aus den abhängigen Ansprüchen hervor und sind in der nachfolgenden Beschreibung erläutert.

In der beigefügten Zeichnung sind einige Ausführungsformen einer Vorrichtung zur Durchführung des Verfahren vereinfacht dargestellt und an Hand der Beschreibung näher erläutert.

Es zeigt:
- Figur 1: zeigt eine Versuchsanlage zur Durchführung des Verfahrens, mit deren Hilfe die Wasserdampfdurchlässigkeit eines Gegenstandes gemessen werden kann, in schematischer Darstellung;
- Figur 2: eine Vorrichtung mit deren Hilfe die Wasserdampfdurchlässigkeit einer Folie oder eines Papieres gemessen werden kann;
- Figur 3: ein wegnehmbares, an die Messvorrichtung angeschlossenes Glied mit dazugehörendem Anschlussnippel;

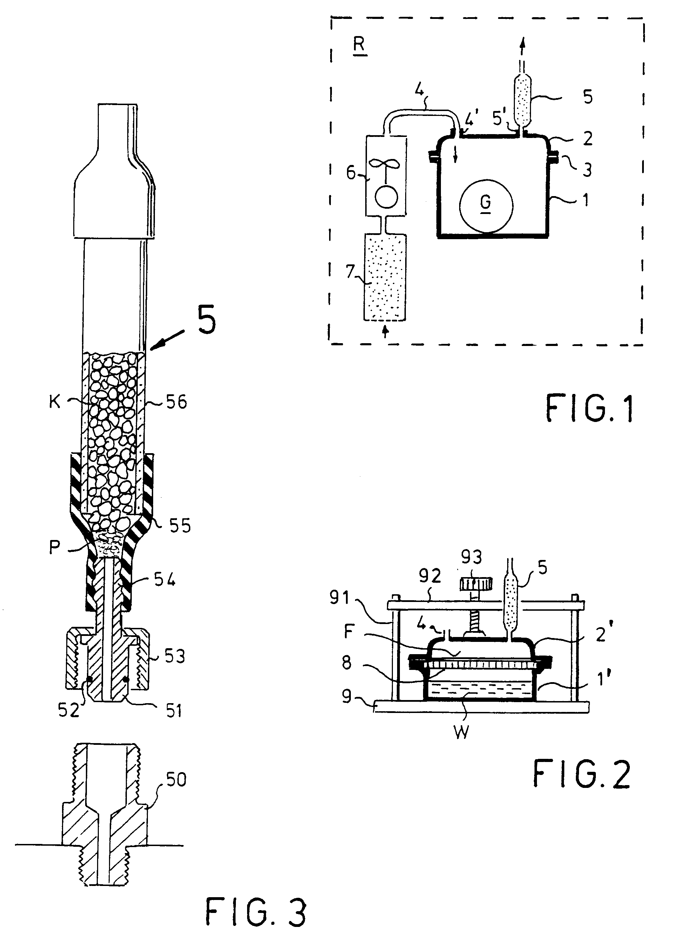

Figur 1 zeigt eine Versuchsanlage in Betrieb. Sie umfasst einen Topf 1 mit einem Deckel 2. Der Deckelrand ist mit einer Dichtung 3 versehen, die den Topf dampf- und luftdicht verschliesst. Der Deckel hat eine Lufteintrittsöffnung 4' an den ein Schlauch 4 angeschlossen ist, durch den ein trockener Luftstrom in den Topf eingeleitet wird. Es ist dabei besonders darauf zu achten, dass der Schlauch aus Wasserdampf-undurchlässigem Material hergestellt ist. Es ist von Vorteil einen metallischen Schlauch oder ein metallisches Röhrchen zu verwenden.

Der Deckel hat eine Luftauslassöffnung 5', auf die ein Glied 5 aufgesetzt ist, durch das die Luft entweicht. Das Glied ist mit feuchtigkeitabsorbierendem Material wie zum Beispiel "Silikagel"-Kristallen gefüllt, so dass es luftdurchlässig bleibt.

Der trockene Luftstrom, der durch den Schlauch 4 in die Vorrichtung gelangt, wird hier mittels eines Gebläses 6 erzeugt, das Umgebungsluft durch einen Silikagel-Luftentfeuchter 7 ansaugt.

In Figur 3 ist das luftdurchlässige, Silikagel-Kristalle enthaltende Glied 5 in grösserem Massstab dargestellt. Für die Durchführung der Messung ist es wesentlich, dass dieses Glied bequem vom Deckel abgenommen, in bestimmten Zeitintervallen gewogen und wieder auf den Deckel aufgesetzt werden kann. Dazu umfasst das Glied eine Kupplung, mit einem am Deckel befestigten Nippel 50 mit einer Bohrung, in die ein hohler Zapfen 51 einsteckbar ist. Ein in einer Nut eingelassener O-Ring 52 sorgt für die Abdichtung und eine Ueberwurfmutter 53 sorgt für den Halt des Gliedes auf dem Nippel. Der hohle Zapfen geht in einen Schlauchanschluss 54 über, auf den eine sich nach oben erweiterte Gummimanschette 55 gestülpt ist, deren erweiterter Teil ein Glasrohr 56 fasst. Das Glasrohr ist mit "Silikagel" Kristallen K gefüllt und oben mit einer Manschette 55 versehen.

Damit kein Kristall herausfallen kann, ist oben und unten ein Pfropfen P aus wasserdampdurchlässigem Material angebracht (beispielsweise ein Kunststoffilter oder synthetische nicht hygroskopische Watte).

Um brauchbare Messresultate zu erhalten, muss die Messung bei gleichbleibender Temperatur durchgeführt werden, da die Wasserdampfabgabe stark temperaturabhängig ist. In Figur 1 ist die Vorrichtung als Ganzes in einem thermostatierten, durch unterbrochene Linien angedeuteten Raum R untergebracht.

In Figur 1 ist eine mit einer dünnen Wachsschicht versehene Frucht, beispielsweise eine Grapefruit in den Topf 1 gelegt. Luftentfeuchter 7 und das abnehmbare Glied enthalten trockene "Silikagel"-Kristalle. Nun wird der Motor M des Gebläses eingeschaltet, so dass trockene Luft in die verschlossene Kammer 1,2 einströmt. Diese nimmt den von der Grapefruit abgegebenen Wasserdampf auf, die sie beim Verlassen der Kammer durch das Glied 5 an deren Silikagel-Füllung abgibt. In bestimmten Zeitintervallen, beispielsweise jeweils nach zwölf Stunden, wird das Glied 5 abgenommen und auf Bruchteilen von Milligramm genau gewogen und dessen Gewichtszunahme berechnet. Die Temperatur wird während der gesamten Versuchsdauer beipielsweise auf 20° Celsius gehalten. Auf Grund der so gewonnenen Messdaten lässt sich dann eine Kurve aufzeichnen, die eine Angabe für die Austrocknungsgeschwindigkeit und somit für die Wasserdampfdurchlässigkeit der Wachsschicht auf der Schale ist. Diese Kurve kann mit einer Messreihe für eine nicht durch eine Wachsschicht geschützte Grapefruit verglichen werden, was dann einen Massstab für die Wirksamkeit der Wachsbeschichtung bildet. Eine ähnliche Messung kann auch für pastöse unverpackte oder verpackte Materien wie Butter oder andere Wasser enthaltende Materie durchgeführt werden. Die Materie, ob fest, flüssig oder pastenförmig, kann auch in einer verschweissten Plastikfolie enthalten sein. Die Messung ergibt dann ein Mass für die Wasserdampfdurchlässigkeit der Verpakkung und des Austrocknens von dessen Inhalt, wie zum Beispiel von Weichkäse.

In Figur 2 ist eine leicht abgeänderte Vorrichtung dargestellt, mit deren Hilfe die Wasserdampfdurchlässigkeit einer Folie, von Papier oder beschichteten Karton für sich festgestellt werden kann. Auf der einen Seite wird sie dabei mit Wasserdampf aus Wasser oder aus einer Wasser enthaltenden Lösung beaufschlagt, über die andere Seite streicht der Strom trockener Luft, die den abgebenen Wasserdampf aufnimmt und an das Glied 5 abgibt.

Die Vorrichtung nach Figur 2 enthält im wesentlichen dieselben Teile wie die Vorrichtung nach Figur 1. Sie umfasst einen Topf 1' und einen Deckel 2. Der Deckel hat eine Lufteinlassöffnung 4' für einen Schlauchanschluss und einen Luftauslass mit einem abnehmbar darauf befestigten Glied. Zwischen dem Rand von Topf und Deckel ist eine Folie F dicht eingeklemmt. Unter der Folie ist ein wasserdampfdurchlässiges Stützelement 8 angebracht und im Topf befindet sich Wasser W.
Damit der Rand der Folie F dichtend zwischen dem Rand von Topf und Deckel eingeklemmt werden kann, ist eine Grundplatte 9 vorgesehen, die mit Zugstangen 91 eine Traverse 92 hält. Mittels der Schraube 93 kann der Deckel fest auf den Topf gepresst und die Folie am Rand eingeklemmt werden.

Die eigentliche Messung geht genauso vor sich wie oben beschrieben. Die Wasserdampfabgabe, die zugleich ein Mass für die Wasserdampfdurchlässigkeit der Folie darstellt, lässt sich in Milligramm pro Zeiteinheit messen und in Wasserdampfdurchlässigkeit in g/m² pro Tag umrechnen, weil ja die Oberfläche vom Einklemmrand genau bekannt ist.

Bei den als Ausführungsbeispielen dargestellten Vorrichtungen besteht die Kammer aus einem Topf mit Deckel, in dem die Einführöffnung für die trockene Luft und auf dem das Glied 5 mit Feuchtigkeit-absorbierendem Mittel angebracht ist. Sowohl die Einführöffnung als auch das Glied 5 könnten auch, nach Figur 1, am Topf angebracht sein. Statt die ganze Versuchsanlage in einem thermostatisierten Raum R aufzustellen, könnte auch die Kammer, das heisst Deckel und Topf, selber mittels in der Wand eingelassene Kühl-Heizleitungen thermostatisiert sein.

Versuche mit der Vorrichtung haben gezeigt, dass damit Messresultate erzielt werden, die mit dem bekannten herkömmlichen viel aufwendigeren Verfahren übereinstimmen oder gar genauer sind als diese. Bei manchen herkömmlichen Verfahren z.B. DIN 53122, muss für jede Wägung der Prüfgegenstand selber gewogen werden, wozu er jedesmal aus der Prüfkammer herausgenommen werden muss.

Die Messung ist so genau, dass Versuche gezeigt haben, dass bei der Verwendung eines einfachen Kunststoffschlauches 4 Wasserdampf aus der Umgebung durch die Schlauchwand hindurch diffundiert. Es empfiehlt sich daher, einen metallischen Schlauch oder ein metallisches Rohr zu verwenden. Ein weiterer Faktor, der die Genauigkeit der Messung beeinflussen kann ist der, dass Wasserdampf aus der umgebenden Atmosphäre vom hygroskopischen Material des Gliedes 5 aufgenommen wird. Dieser Störfaktor lässt sich dadurch ausschalten, das man dem wasserdampfabsorbierenden Glied 5 ein zweites ähnlich aufgebautes Glied nachschaltet, das eine Rückabsorption von Wasserdampf aus der Umgebungsluft verhindert.

## Patentansprüche

1. Vorrichtung zur Messung der Wasserdampfdurchlässigkeit, bestehend aus einer Messkammer mit einer Lufteintrittsöffnung (4') und einer Luftaustrittsöffnung (5'), wobei an der Lufteintrittsöffnung ein Gebläse (6) und ein Lufttrockner (7) und an der Luftaustrittsöffnung ein Wasserdampfkollektor (5) mit feuchtigkeitabsorbierendem Material angeschlossen ist, dadurch gekennzeichnet, dass die Messkammer dank seiner Gestaltung sowohl zur Aufnahme eines verpackten oder unverpackten Gegenstandes, oder zur Bestimmung der Wasserdampfdurchlässigkeit einer Folie geeignet ist, in dem die Messkammer die Form eines Topfes (1) mit einem Deckel (2) hat, deren dichtenden Ränder als reiner Verschluss und zusätzlich als Einklemmrand zur Halterung einer zu messenden Folie ausgestaltet sind und die Messfläche der zu messenden Folie definieren, und dass die Luftaustrittsöffnung (5') mit einer dichtenden Kupplung (53) zur lösbaren Befestigung des Wasserdampfkollektors (5) in Form eines luftdurchlässigen Gliedes (5) ausgestaltet ist.

2. Vorrichtung nach Anspruch 1, dadurch gekennzeichnet, dass im Bereich des oberen Randes des Topfes (1') ein wasserdampfdurchlässiges flaches Stützelement (8) angeordnet ist.

3. Vorrichtung nach Anspruch 1, dadurch gekennzeichnet, dass das Glied (5) ein durchsichtiges Rohr (56) umfasst, das sich infolge der Wasserabsorption allmählich verfärbende Kristalle (K) enthält.

4. Vorrichtung nach Anspruch 1, dadurch gekennzeichnet, dass dem Glied (5) ein zweites ähnlich aufgebautes Glied wegnehmbar nachgeschaltet ist.

## Claims

1. Apparatus for measuring steam permeability, comprising a measuring chamber with an air inlet (4') and an air outlet (5'), a blower (6) and an air dryer (7) being connected to the air inlet and a steam collector (5) with moisture-absorbing material being connected to the air outlet, characterized in that, as a result of its design, the measuring chamber is suitable both for receiving a packed or an unpacked object, whose defining surface forms a diaphragm, or for determining the steam permeability of a film, in which the measuring chamber is in the form of a pot (1) with a lid (2), whose sealing edges are constructed as a closure and additionally as a clamping edge for retaining a film to be measured and define the measuring surface of the film to be measured, and that the air outlet (5') is provided with a sealing coupling for detachable fixing of the steam collector in the form of an air-permeable member (5).

2. Apparatus according to claim 1, characterized in that a steam-permeable, flat support element (8) is arranged in the vicinity of the upper edge of the pot (1').

3. Apparatus according to claim 1, characterized in that the member (5) incorporates a transparent pipe (56), which contains crystals (K), which gradually change colour due to the water absorption.

4. Apparatus according to claim 1, characterized in that the member (5) is followed by a second, similarly constructed, removable member.

## Revendications

1. Appareil pour la mesure de la perméabilité à la vapeur d'eau, comprenant une chambre de mesure ayant un orifice d'entrée d'air (4') et un orifice de sortie d'air (5'), dans lequel sont adaptés à l'orifice d'entrée d'air un dispositif de soufflage (6) et un sécheur d'air (7) et à l'orifice de sortie d'air un collecteur de vapeur d'eau (5) ayant un matériau absorbant l'humidité, caractérisé en ce que la chambre de mesure est, grâce à sa structure, adaptée aussi bien pour recevoir un objet emballé qu'un objet non emballé, dont la surface limitante forme un diaphragme, ou pour la détermination de la perméabilité à l'eau d'une feuille, dans lequel la chambre de mesure a la forme d'un pot (1) muni d'un couvercle (2), dont les bords d'obturation se présentent sous la forme d'un simple joint et en outre d'un bord de serrage pour le maintien d'une feuille à mesurer et définissent la surface de mesure de la feuille à mesurer, et que l'orifice de sortie d'air (5') est muni d'un dispositif d'accouplement obturant pour la fixation amovible du collecteur de vapeur d'eau sous la forme d'un élément (5) perméable à l'air.

2. Appareil selon la revendication 1, caractérisé en ce que dans la région du bord supérieur du pot (1') est disposé un élément support (8) plat, perméable à la vapeur d'eau.

3. Appareil selon la revendication 1, caractérisé en ce que l'élément (5) comprend un tube transparent (56), contenant des cristaux (K) dont la couleur varie progressivement à la suite de l'absorption d'eau.

4. Appareil selon la revendication 1, caractérisé en ce qu'à l'élément (5) est raccordé en aval un second élément, de constitution semblable et que l'on peut enlever.
